# EUROPEAN PATENT APPLICATION

(11) **EP 3 248 834 A1**
(43) Date of publication of application: **29.11.2017**
(21) Application number: 16171153.6
(22) Date of filing: 24.05.2016
(51) Int. Cl.: B60N 2/62, B60N 2/02

(54) **SEAT CUSHION LENGTH ADJUSTMENT**

(71) Applicant: Schukra Gerätebau GmbH, 2560 Berndorf (AT)
(72) Inventor: Dickschas, Uwe, 91088 Bubenreuth (DE); Falster, Frank, 90480 Nürnberg (DE)
(74) Representative: Neusser, Sebastian

(57) **Abstract**

A seat cushion length adjusting device comprises a support (11) of a seat (1), a guide member (13) coupled to the support (11), and an adjusting member (12) for coupling to at least a portion of a seat cushion (4, 5) of the seat (1). The adjusting device further comprises a clamp (20) arranged between the guide member (13) and the adjusting member (12) and configured to allow relative displacement (55) of the adjusting member (12) with respect to the support (11) along the guide member (13) in an open state (61) and to prevent the relative displacement (55) in a close state (62) by bracing (290) the guide member (13). In some examples, the seat cushion length may be manually adjusted.

## Description

### TECHNICAL FIELD

Embodiments of the invention relate to a seat cushion length adjusting device and to a corresponding method. In some examples, the length of the seat cushion may be manually adjusted.

### BACKGROUND

A wide variety of seats is provided with components which allow at least a portion of the seat to be adjusted. Examples for such adjustable portions include adjustable lumbar supports, adjustable side supports, or various massage functions. Seats which provide a user with the option to adjust at least a portion of the seat are used to provide enhanced comfort. This may be of particular importance when a user may be likely to sit on the seat for an extended time period. A typical example is a seat for use in transportation, e.g., a car seat or another vehicle seat. For illustration, for car seats, bus seats, or other public transportation seats, the seat occupant may spend an extended time period sitting on the respective seat.

In order to accommodate different passenger sizes, it is desirable to provide a seat which allows a seat cushion size to be adjusted. This can be attained by increasing and/or decreasing a length of a seat cushion. The seat cushion upon which the user's thighs rest may thereby be adjusted in its length, measured along the forward-rearward direction of the seat, for example.

There are adjusting devices known which provide the possibility of manually adjusting the seat cushion length. These devices typically implement a step-wise change of the seat cushion length. For this, a guide member along which an adjusting member can be displaced may comprise an array of engagement features such as holes, protrusions, or hooks to lock the position. A spacing of the engagement features then corresponds with the increment of the step-wise change of the seat cushion length.

However, such adjusting devices face certain restrictions and drawbacks. In particular, it is possible that the step-wise change does not offer an increment suited for the user's need. In other words, it is possible that due to the anatomy of the user and/or preferences of the user, a length of the seat cushion is desired that cannot be attained due to the finite size increment.

### SUMMARY

Therefore, a need exists for advanced seat cushion length adjusting devices. In particular, a need exists for adjusting devices which overcome or mitigate at least some of the above-identified restrictions and drawbacks.

This need is met by the features of the independent claims. The dependent claims define embodiments.

According to an example, a seat cushion length adjusting device comprises a support of a seat and a guide member coupled to the support. The adjusting device further comprises an adjusting member for coupling to at least a portion of a seat cushion of the seat. The adjusting device further comprises a clamp arranged with respect to the guide member. The clamp is configured to allow relative displacement of the adjusting member with respect to the support along the guide member in an open state. The clamp is further configured to prevent the relative displacement in a close state; for this, the clamp is configured to brace the guide member.

According to an example, a method of adjusting the length of a seat cushion of a seat comprises, in an open state of a clamp, relatively displacing an adjusting member with respect to a support of the seat. Said relatively displacing is along a guide member. The adjusting member is to at least a portion of the seat cushion. The method further comprises, in a close state of the clamp: the clamp bracing the guide member to prevent said relative displacing.

The devices and methods according to various embodiments may be utilized for adjusting a length of a seat cushion. The devices and methods according to the various embodiments may be used for adjusting a length of a seat cushion of a vehicle seat, in particular of an automotive vehicle seat.

### BRIEF DESCRIPTION OF THE DRAWINGS

Additional features and advantages of the invention will become more readily appreciated from the following detailed description of preferred or advantageous embodiments with reference to the accompanying drawings in which like or identical reference numerals indicate like or identical elements.
FIG. 1 is a schematic cross-sectional view of a seat comprising a support, a guide member, an adjusting member, and a clamp according to an embodiment.
FIG. 2 schematically illustrates an open state of a clamp according to an embodiment.
FIG. 3 schematically illustrates a close state of the clamp of FIG. 2 according to an embodiment.
FIG. 4 schematically illustrates an open state of a clamp according to an embodiment, wherein the clamp comprises a plate having a through hole through which the guide member extends, the plate being rotatably arranged with respect to the guide member.
FIG. 5 schematically illustrates a close state of the clamp of FIG. 4 according to an embodiment, wherein the plate is canted against the guide member.
FIG. 6 is a schematic top view of the adjusting device comprising the clamp of FIG. 4 in the open state.
FIG. 7 is a schematic top view of the adjusting device comprising the clamp of FIG. 4 in the close state.
FIG. 8 is a rear view of a clamp in an open state according to an embodiment.
FIG. 9 is a top view of the clamp of FIG. 8 in the open state according to an embodiment.
FIG. 10 is a rear view of the clamp of FIG. 8 in a close state according to an embodiment.
FIG. 11 is a top view of the clamp of FIG. 8 in the close state according to an embodiment.
FIG. 12 is a perspective view of the adjusting device in a first relative position of the adjusting member with respect to the support according to an embodiment.
FIG. 13 is a perspective view of an adjusting device of FIG. 12 in a second relative position of the adjusting member with respect to the support according to an embodiment.
FIG. 14 is a top view of the adjusting device comprising a clamp in a close state according to an embodiment.
FIG. 15 is a top view of the adjusting device comprising the clamp of FIG. 14 in an open state according to an embodiment.
FIG. 16 is a perspective view of the clamp of FIGs. 14 and 15 in the close state according to an embodiment.
FIG. 17 is a top view of the adjusting device comprising a clamp and an actuator operating the clamp in the open state according to an embodiment.
FIG. 18 is a top view of the adjusting device of FIG. 17, wherein the actuator operates the clamp in the close state according to an embodiment.
FIG. 19 is a perspective view corresponding to FIG. 17.
FIG. 20 is a perspective view corresponding to FIG. 18.
FIG. 21 is a flowchart of a method according to various embodiments.

### DETAILED DESCRIPTION OF EMBODIMENTS

Exemplary embodiments of the invention will now be described with reference to the drawings. While some embodiments will be described in the context of specific fields of application, such as in the context of automotive vehicle seating, the embodiments are not limited to this field of application. The features of the various embodiments may be combined with each other unless specifically stated otherwise. In the drawings, like reference numerals refer to like elements.

Hereinafter, techniques of adjusting the length of a seat cushion of a seat are described. Such techniques may be applicable with respect to different kinds and types of seats or chairs, including, but not limited to: vehicle seats, airplane seats, train seats, office chairs, other furniture chairs, etc.

In some examples, techniques are described which rely on manually actuating the length adjustment. For this, the seat may be provided with a handle that can be operated manually by a user. In further examples, the techniques may employ a motor for automatically actuating the length adjustment. Still further examples may rely on a pneumatic or hydraulic adjustment.

Some examples described herein rely on a releasable brace fit between a clamp and a guide member for selectively enabling relative displacement. In some examples, the relative displacement is implemented by a translational motion, e.g., along a linear path.

The brace fit may provide for pinching engagement between the clamp and the guide member. Friction is established between an engagement surface of the clamp and an inter-related engagement surface of the guide member. Such bracing of the guide member may be implemented by urging into contact a surface of the clamp with a surface of the guide member in the close state. In the open state, the surfaces may be offset with respect to each other to enable the relative displacement. This may be attained, e.g., by selectively implementing canted engagement of a plate having a hole with the guide member in the close state.

The guide member may be braced at arbitrary positions along its longitudinal direction. Thereby, by means of the brace fit, it is possible to implement a gradual relative displacement of the adjusting member with respect to the support. A stepwise relative displacement of the adjusting member with respect to the support according to reference implementations may thus be avoided. Thereby, it becomes possible to manually lock the seat cushion length in arbitrary positions. Thereby, fine adjustment of the seat cushion length is possible. User comfort is increased.

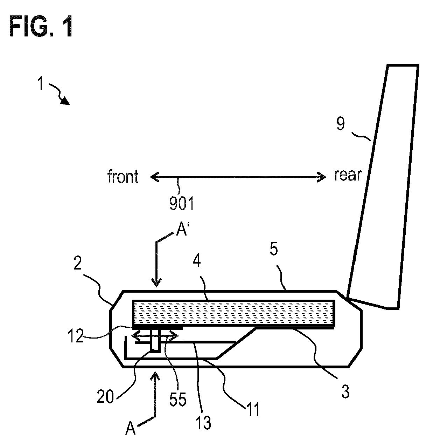

FIG. 1 is a schematic view of a vehicle seat 1 according to an embodiment. The vehicle seat 1 may be configured as a car seat or another automotive vehicle seat.

The vehicle seat 1 generally comprises a seat 2 and a backrest 9. The seat 2 may comprise a support 11 implementing a structural member which provides structural stability to the seat 2. The support 11 may be a seat pan and/or a seat frame. The support may be made of metal.

The seat 2 comprises a seat cushion. The seat cushion may comprise a cover 5. The cover 5 may be formed from a woven or non-woven fabric. The seat cushion may comprise a resilient backing 4, which provides enhanced comfort. The resilient backing 4 may be upholstery. The resilient backing 4 may be made of or may comprise a foam material or a fiber material, for example. The cover 5 is reversibly deformable when a seat cushion length adjusting device extends or reduces a length of the seat cushion. The resilient backing 4 may be resiliently deformed and/or at least a portion of the resilient backing 4 may be displaced relative to the cover 5 when the seat cushion length is adjusted.

The vehicle seat 1 includes the seat cushion length adjusting device which is coupled to the seat cushion to adjust a length of the seat cushion. The seat cushion length adjusting device is installed in a cavity defined within the seat 2 and is operative to modify an exterior shape of the vehicle seat 1 by reversibly changing a length of the seat cushion. The length of the seat cushion upon which the thighs of the seat occupant may rest can thereby be changed.

The adjustment of the seat cushion length may be implemented in various ways using the seat cushion length adjusting device. For illustration, the cover 5 and the resilient backing 4 may be deformed elastically under the action of the seat cushion length adjusting device. Alternatively or additionally, the resilient backing 4 may be displaced within the seat under the action of the seat cushion length adjusting device. Alternatively or additionally, the resilient backing 4 may have at least two portions which are displaceable relative to one another, and the seat cushion length adjusting device 4 may be configured to displace one of the portions of the resilient backing 4 relative to another one of the portions of the resilient backing 4. The seat cushion length adjusting device may be configured to adjust a distance between two opposing peripheral edges of the seat cushion.

As will be explained in more detail below, the seat cushion length adjusting device generally includes an adjusting member 12 which can be displaced relative to the support 11. The adjusting member 12 may be mounted on the support 11 so as to be displaceably in a translatory manner relative to the support 11. For this, a guide member 13 is provide which extends along the direction of relative displacement 55.

In some examples, the guide member 13 may define a linear path along which the relative displacement 55 is implemented. The guide member may be implemented by a guide track, a rod, a bar, etc.. The guide member 13 may be made of metal. This may provide for the ability to fixedly lock the adjusting member 12 even in exceptional events such as a front crash of the vehicle in which the seat 1 is mounted.

In FIG. 1, the forward-rearward direction 901 of the seat 1 is illustrated. As is apparent from FIG. 1, the forward-rearward direction 901 is aligned with the direction of relative displacement 55 of the adjusting member 12 with respect to the support 11. During normal seating, it is possible that forces are acting in the forward-rearward direction 901; this may be due to the user moving. Further, if the vehicle in which the vehicle seat 1 is mounted is accelerating or deaccelerating, even stronger forces may act in the forward-rearward direction 901. Still further, if the vehicle in which the vehicle seat 1 is mounted is involved in a crash, even stronger forces may act in the forward-rearward direction 901. Due to such forces, it is typically required to enable strong locking the relative position of the adjusting member 12 with respect to the support 11. Locking of the relative position avoids unintentional relative displacement 55.

A clamp 20 is provided which implements such locking of the relative position. The clamp 20 may be actuated in order to switch from a close state - in which the relative position of the adjusting member 12 with respect to the support 11 is locked and the relative displacement 55 is prevented - to an open state - in which relative displacement 55 of the adjusting member 12 with respect to the support 11 along the guide member 13 is possible; and vice versas. The clamp 20 thus provide releasable locking.

The clamp 20 and the guide member 13 are configured to prevent the relative displacement 55 in arbitrary positions of the adjusting member 12 with respect to the support 11. Hence, it is possible that the user freely chooses the position of the adjusting member 12 with respect to the support 11 - and, along with this, the length of the cushion 5. I.e., it is possible to gradually re-positioning of the adjusting member 12 with respect to the support 11 is possible. Increments in the re-positioning may be avoided. In detail, a stepwise adjustment of the length of the seat cushion 4 is avoided.

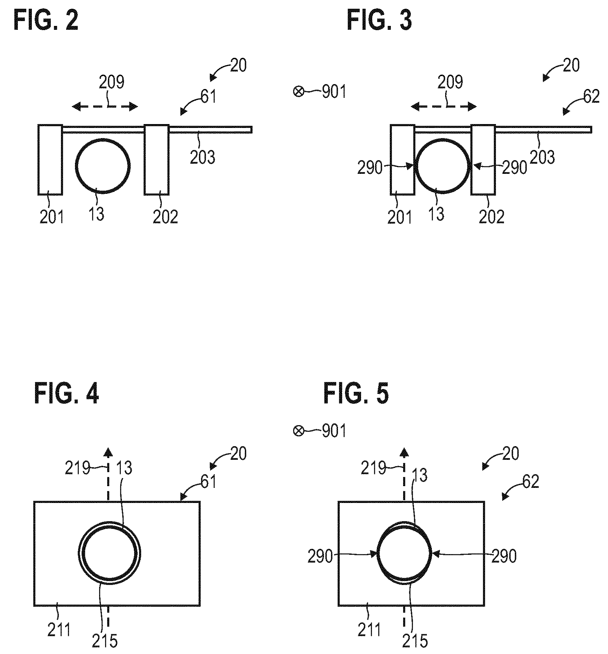

FIG. 2 illustrates aspects of the clamp 20 according to an example. In detail, FIG. 2 illustrates the clamp 20 in the open state 61. FIG. 2 is a schematic cross-sectional view along the line AA' of FIG. 1 (the forward-rearward direction 901 is perpendicular to the drawing plane of FIG. 2).

The clamp 20 in the example of FIG. 2 comprises two side parts 201, 202 that are movable along a shaft 203 (left-right direction in FIG. 2). In the open state 61 as illustrated in FIG. 2, the side parts 201, 202 are offset with respect to each other such that they are not in contact with the guide member 13 implemented by a rod in the example of FIG. 2. Because the side parts 201, 202 are not in contact with the guide member 13, they do not brace the guide member 13. A brace fit is not established in the open state 61. Therefore, the adjusting member 12 (coupled to the clamp 20, but not shown in FIG. 2) can move in the forward-rearward direction 901 with respect to the support 11 of the seat 1.

FIG. 3 illustrates aspects of the clamp 20 of the example of FIG. 2. In FIG. 3, the clamp 20 is illustrated in the close state 62. Here, inner surfaces of the side members 201, 202 are in contact with an outer surface of the rod 13. A brace fit 290 is established. The brace fit 290 prevents the relative displacement 55 of the of the adjusting member 12 with respect to the support 11. Thus, the seat cushion length adjusting device is in a locked state where unintentional change of the length of the seat cushion 4, 5 is avoided.

In the examples of FIGs. 2 and 3, the clamp 20 operates based on a translational movement along the axis 209. Here, the open state 61 and the close state 62 correspond to different translational positions along the axis 209 (oriented in the drawing planes of FIGs. 2 and 3). In other examples, it is possible that different activation techniques of the clamp 20 are employed. E.g., rotational movement of parts of the clamp 20 may be employed to engage with the guide member 13.

FIG. 4 illustrates aspects of the clamp 20. In detail, FIG. 4 illustrates the clamp 20 in the open state 61. FIG. 4 is a schematic cross-sectional view along the line AA' of FIG. 1.

The clamp 20 in the example of FIG. 4 comprises a plate 211 having a through hole 215 through which the guide member 13 extends. Again, the guide member 13 is implemented by a rod.

The plate 211 can be rotated around an axis perpendicular to the longitudinal direction of the rod 13. The rotational axis 219 is illustrated in FIG. 4 (extending in the drawing plane of FIG. 4 and the up-down direction). In the example of FIG. 4, the clamp 20 operates based on a rotational movement. Thereby, an inner surface of the through hole 215 engages with an outer surface of the rod 13. Canted engagement of the plate 211 and the rod 13 implements the brace fit. Metal-on-metal engagement is possible where, both, the rod 13 and the plate 211 are made of metal.

An edge-to-edge distance of the through hole 215 of the plate 211 may be slightly larger than the diameter of the outer surface of the rod 13. E.g., the edge-to-edge distance of the through hole 215 of the plate 211 may lie within the range of 100.2 % - 102 % of the diameter of the outer surface of the rod, preferably within the range of 100.5 % - 101.5 %, more preferably within the range of 100.7 % - 101 %. Such a dimensioning may facilitate a brace fit by only slight rotation of the plate 211 along the rotational axis 219.Such a dimensioning may enable effective canting of the plate 211 against the rod 13.

The rod 13, in the example of FIG. 4, has a circular cross-section, but may have a differently shaped cross-section in other examples. The rod 13 may have a smooth surface which is unstructured along its length extending along the forward rearward direction 901. Thus, the rod 13 may be devoid of protrusions or notches. Thereby, it becomes possible to lock the clamp 20 and thus prevent the relative displacement 55 in arbitrary positions of the adjusting member 12 with respect to the support 11. Thereby, gradual relative displacement 55 is possible. In detail, by means of the brace fit 290, it is not necessary to provide engagement features on the rod 13 such as protrusions or notches. Instead of employing, e.g., a hooked engagement between the rod 13 and the clamp 20, the brace fit 290 may be flexibly employed at arbitrary positions along the length of the rod 13.

In the example of FIG. 4, the clamp 20 is in the open state 61. This corresponds to a first rotational position of the plate 211 with respect to the rod 13. Here, the plate 211 extends substantially perpendicular to the longitudinal axis of the rod 13 (the longitudinal axis of the rod 13 is perpendicular to the drawing plane of FIG. 4, while the plate 211 extends in the drawing plane of FIG. 4). E.g., the plate 211 extends at a first angle with respect to the longitudinal axis of the rod 13 (oriented perpendicular to the drawing plane of FIG. 4). The first angle lies within the range of 88 degrees - 92 degrees.

FIG. 5 illustrates aspects of the clamp 20 of the example of FIG. 4. In FIG. 5, the clamp 20 is illustrated in the close state 62. If compared to the open state 61, the plate 211 is rotated by a few degrees, e.g., 1 - 10 degrees, around the rotational axis 219. The plate 211 attains a rotational position which is different to the rotational position of FIG. 4.

Because of this rotation, the projection of the through hole into the cross-sectional plane of the rod 13 (drawing plane of FIG. 5) decreases. The canted engagement between the inner surface of the through hole 215 and the outer surface of the rod 13 results. Thus, the brace fit 290 is established between an inner surface of the through hole 215 and an outer surface of the rod 13.

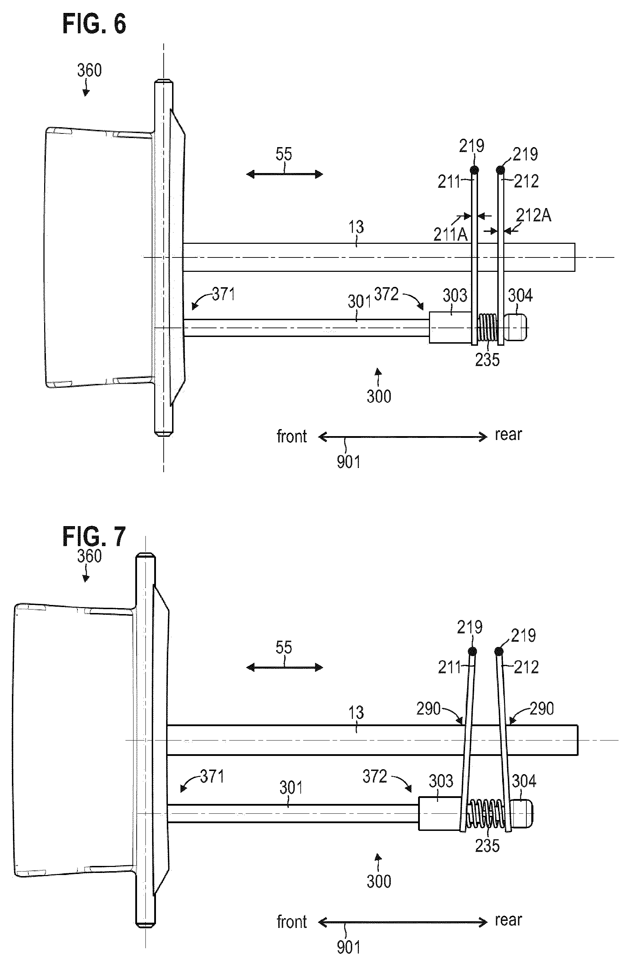

FIG. 6 illustrates aspects of the clamp 20. In detail, the clamp 20 of the example of FIG. 6 generally corresponds to the clamp 20 of the example of FIGs. 4 and 5. Also in FIG. 6, the clamp 20 is operated by rotational movement of a plate having a through hole.

In the example of FIG. 6, the clamp 20 comprises two plates 211,212. Each one of the two plates 211, 212 is arranged rotatably with respect to the rod 13. By providing more than a single plate, it is possible to brace 290 the guide member 13 firmly such that the relative displacement 55 is effectively and reliably prevented in the close state 62. Generally, the clamp 20 may comprise a single plate, two plates, or more than two plates.

In the example of FIG. 6, the clamp 20 is in the open state 61. I.e., each one of the two plates 211,212 extends substantially perpendicular, e.g., with an angle of 88 degrees - 92 degrees with respect to the longitudinal axis of the rod 13 (dashed-dotted line in FIG. 6 extending in the left-right direction). In this rotational position, the inner surfaces of the through holes (not visible in FIG. 6) of the plates 211, 212 do not brace the outer surface of the rod 13.

FIG. 6 further illustrates aspects of a spring 235 of the clamp 20. As illustrated in FIG. 6, the coil spring 235 is arranged in between the two plates 211, 212 and is coupled with each one of the plates 211, 212. In the example of FIG. 6, the spring 235 is in a compressed state. Hence, the left and right ends of the spring 235 push against the ends of the plates 211, 212. Thus, the spring 235 is configured to urge the plates 211, 212 into a different rotational position as the one illustrated in FIG. 6 to thereby brace an inner surface of the through holes 215 of the plates 211, 212 against the guide member 13. The corresponding close state 62 is shown in FIG. 7.

FIG. 7 illustrates aspects of the clamp 20 and the spring 235 of the clamp 20 and corresponds to the scenario of FIG. 6. In FIG. 7, the clamp 20 is in the close state 62.

As can be seen, the plate 211 and the plate 212 enclose an angle with respect to each other. Furthermore, an angle between each one of the plates 211, 212 and the longitudinal axis of the rod 13 differs from 90 degree; hence, the plates 211, 212 do not extend substantially perpendicular to the longitudinal axis of the rod 13. The plate 211 encloses an angle of 87 degrees with the longitudinal axis of the rod 13; the plate 211 encloses an angle of 93 degrees with the longitudinal axis of the rod 13.

Because of canted engagement, the brace fit 290 between the inner surfaces of the through holes 215 of the plates 211, 212 (not visible in FIG. 7) and the outer surface of the rod 13 is established. This prevents the relative displacement 55 of the adjusting member 12 with respect to the support 11 (both not depicted in FIG. 7).

In the close state 62, the spring 235 is in an expanded state if compared to the scenario of the open state as depicted in FIG. 6. Thus, the spring 235 implements the clamp 20 to be normally closed.

As illustrated in FIG. 7, the plates 211, 212 do not deform under the force applied by the spring 235. I.e., the plates 211, 212 maintain a substantially planar surface. This is because the spring 235 is configured to exert a force on the plates 211, 212 which is smaller than a deformational threshold force of a material of the at least one plate 211, 212. By avoiding the formation of the plates 211, 212, wearout of the clamp 20 can be avoided.

E.g., the plates 211, 212 may be made out of metal. The metal may be reinforced by appropriate techniques in order to obtain a higher deformational threshold force. Therefore, the brace fit 290 can bear higher forces and thus effectively prevent the relative displacement 55.

It is possible that each one of the plates 211, 212 has a thickness 211A, 212A of not less than 1 millimeter, preferably of not less than 1.5 millimeters, more preferably of not less than 2 millimeters. Again, by dimensioning the thickness of the plates 211,212 appropriately, deformation of the plates 211, 212 can be avoided. Thereby, the clamp 20 can bear higher forces.

Absorbing relatively high forces facilitate application of the clamp 20 in the seat cushion length adjusting device. This is because the direction of the relative displacement 55 is typically parallel to the forward-rearward direction 901 of the seat 1. In such a direction, strict safety requirements must be met due to potentially high forces acting in the scenario of the front crash.

FIGs. 6 and 7 further illustrates aspects of an actuator. The actuator is configured to selectively operate the clamp 20 in the open state 61 or the close state 62. The actuator comprises a handle 360 which facilitates manual operation of the clamp 20. E.g., the handle 360 may be arranged at a front part of the seat 1. By implementing manual operation, cost effective, yet precise length adjustment is possible.

The actuator further comprises a Bowden cable 300. The Bowden cable 300 extends from the handle 360 to the clamp 20. A first end 371 of the Bowden cable 300 is coupled to the handle 360 and an opposing second and 372 of the Bowden cable 300 is coupled to the clamp 20. In the example of FIGs. 6 and 7, the Bowden cable extends in parallel to the rod 13.

While in the depicted examples of FIGs. 6 and 7 the actuator comprises a Bowden cable, in other examples it is possible to employ a lever. The lever may extend between the handle 360 and the clamp 20. The lever may implement a corresponding functionality as described herein with respect to the various examples relying on a Bowden cable.

Illustrated in FIG. 7 is the sleeve 301 of the Bowden cable 300. The sleeve 301 has an end piece 303 which forms a stop for the plate 211. An actuator wire 302 (only partially visible in FIG. 7 and not visible in FIG. 6) also has an end piece 304 which forms a stop for the plate 212. When the handle 360 is operated, a distance between the end pieces 303, 304 is decreased against the force of the spring 235. Then, the plates 211, 212 are urged into the rotational position corresponding to the open state 61 (cf. FIG. 6). When the handle 360 is released, the spring 235 expands and allows to distance the end pieces 303, 304; thereby, the plates 211, 212 are arranged in the rotational position corresponding to the close state 62 (cf. FIG. 7). Transition from the close state 62 to the open state 61 needs to overcome the force of the spring 235; transition from the open state 61 to the close state 62 is implemented by the force of the spring 235.

In the example of FIGs. 6 and 7, the rotational axes 219 are arranged at an end of the respective plates 211, 212. These ends are opposing the ends at which the spring 235 is positioned. In particular, the rotational axes 219 are arranged offset with respect to the through holes 215 which extend close to the rod 13. By such an arrangement of the rotational axis 219, additional leverage can further strengthen the brace fit 290.

In other scenarios, other arrangements of the rotational axis 219 are possible.

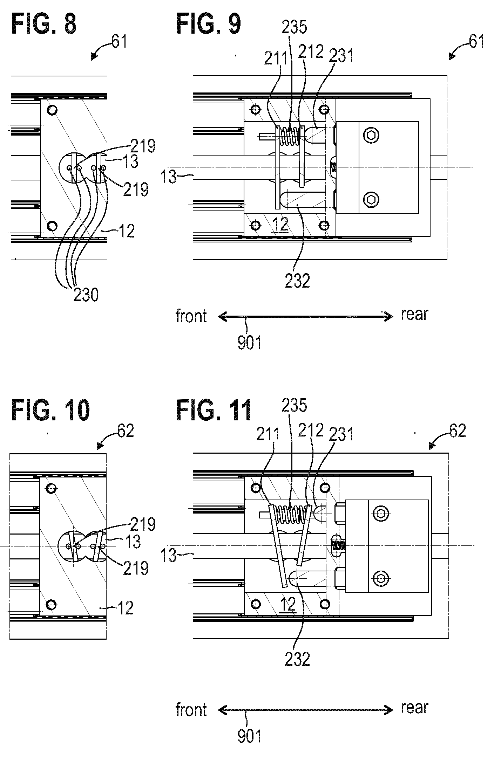

FIGs. 8 and 9 illustrate the open state 61 of a further example implementation of the clamp 20. In detail, the clamp 20 of the example of FIGs. 8 and 9 generally corresponds to the clamp 20 of the example of FIGs. 4 and 5. Also in FIGs. 8 and 9, the clamp 20 is operated by rotational movement of a plate 211, 212 having a through hole 215 (not visible in FIGs. 8 and 9).

Here, protrusions 230 are provided on the backside which result in the axis of rotation 219 being arranged aligned with the respective through hole 215. Furthermore, stops 231, 232 are provided which limit movement of the plates 211, 212.

FIGs. 10 and 11 illustrate the close state 62 of the example implementation of the clamp 20 according to FIGs. 8 and 9.

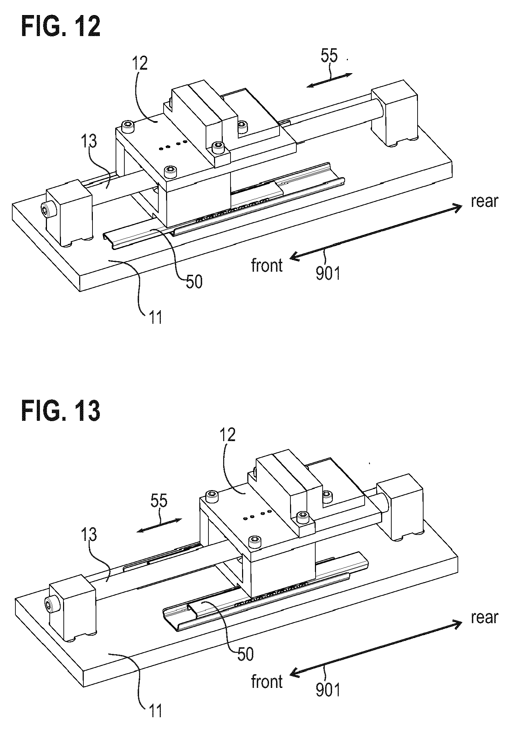

FIG. 12 illustrates a first relative displacement 55 of the adjusting member 12 with respect to the support 11. A guide track 50 further supports the relative displacement 55. The first relative displacement 55 corresponds to a first length of the seat cushion 5, 6 (not depicted in FIG. 12).

FIG. 13 illustrates a second relative displacement 55 of the adjusting member 12 with respect to the support 11. The first relative displacement 55 corresponds to a second length of the seat cushion 5, 6 (not depicted in FIG. 13).

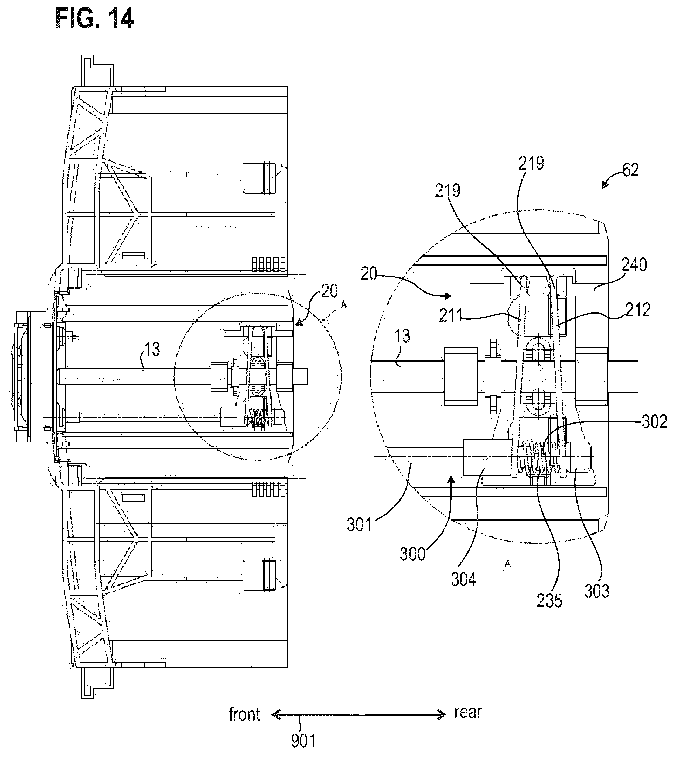

FIG. 14 illustrates the close state 62 of a further example implementation of the clamp 20. Here, a protrusion 240 is provided at an end of the plates 211, 212 (labeled in the inset of FIG. 14 showing details of the clam 20). Because of this, the axis of rotation 219 is arranged offset with respect to the through holes 215.

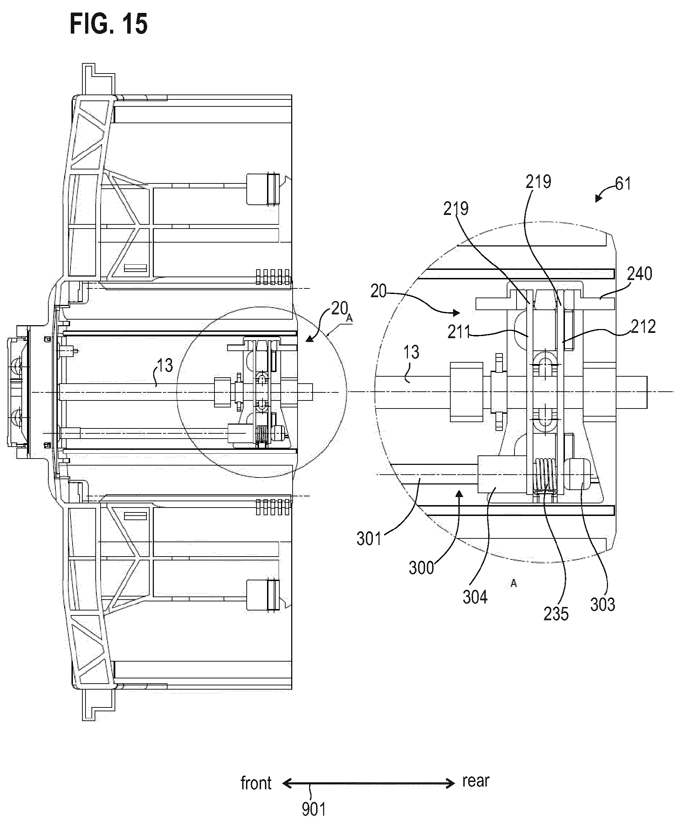

FIG. 15 illustrates the open state 61 of the example implementation of the clamp 20 according to FIG. 14.

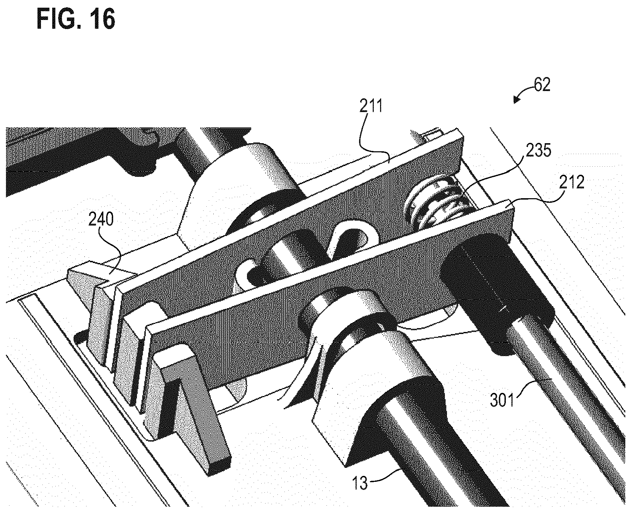

FIG. 16 illustrates the close state 62 of the example implementation of the clamp 20 according to FIG. 14.

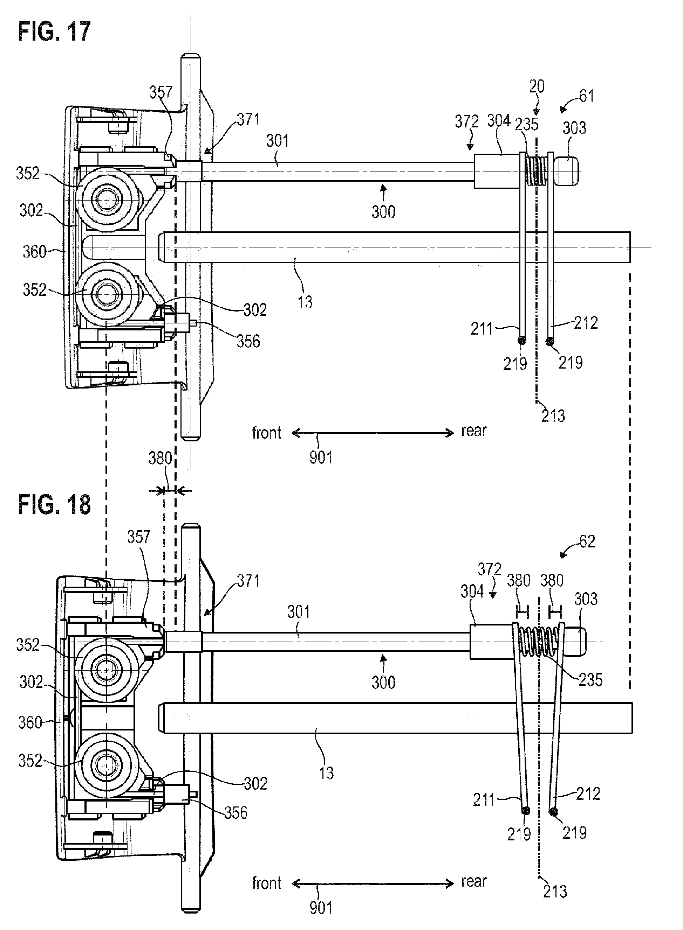

FIG. 17 illustrates aspects with respect to the actuator. In detail, FIG. 17 illustrates aspects with respect to the handle 360 and the Bowden cable 300. The clamp 20 of the example of FIG. 17 generally corresponds to the clamp 20 of FIGs. 6, 7, 14 - 16. Also in FIG. 17, the clamp 20 is operated by rotational movement of a plate 211, 212 having a through hole 215 (not visible in FIG. 17).

The actuator of FIG. 17 enables symmetric rotation of the plates 211, 212. A symmetry axis 213 is illustrated (dashed-dotted line). The symmetry axis 213 extends perpendicular to the longitudinal axis of the guide member 13, here implemented as a rod.

To attain the symmetric rotation of the plates 211, 212, the actuator is configured such that the end piece 304 of the sleeve 301 moves by the same distance as the end piece 303 of the actuator wire 302 - albeit in opposing directions - when switching between the open state 61 and the close state 62.

For this, the sleeve 301 of the Bowden cable 300 terminates at a stop 357 coupled to and thus moveable with the handle 360. The actuator wire 302 of the Bowden cable 300 is guided via the pulley implemented by two rollers 352 towards a stop 356. Also the stop 356 is coupled to and thus moveable with the handle 360. The pulley diverts the direction of the actuator cable 302 by 180 degrees. The pulley is not coupled to the handle 360; if the handle 360 moves, the rollers 352 of the pulley remain stationary.

In some examples, it is possible to employ a bail alternatively or additionally to the rollers of the pulley. Also the bail may remain stationary if the handle 360 moves.

In the open state 61 as depicted in FIG. 17, the handle 360 - and with it the stop 357 - are positioned towards the rear of the seat. When switching into the open state 61, the user operates the handle 360 accordingly. This results in an arrangement of the end piece 304 moved towards the rear.

FIG. 18 illustrates aspects with respect to the actuator for the example of FIG. 17. FIG. 18 illustrates the close state 62. If compared to the open state 61 of FIG. 17, the handle 360 - and with it the stop 357 - have moved towards the front (the vertical dashed lines provide a guide to the eye illustrating this movement). This movement is facilitated by the spring 235 if the user releases the handle 360.

Because the stop 357 has moved by the distance 380, also the end piece 304 moves by that distance towards the front (left side of FIG. 18). This results in an extension of the spring 235 by the distance 380 to the left side of the symmetry axis 213.

Additionally, when switching from the open state 61 to the close state 61, the stop 356 moves along with the handle 360 towards the front. Because the stop 356 has moved by the distance 380 and because the pulley remains stationary, also the end piece 303 moves by said distance 380 towards the rear (the direction of the movement is reversed by the rollers 352 of the pulley). This results in an extension of the spring 235 by said distance 380 to the right side of the symmetry axis 213.

Again, in some examples, it is possible to employ a bail alternatively or additionally to the rolls of the pulley. Also the bail may remain stationary if the handle 360 moves.

From this it is apparent that the actuator is configured to relatively offset the second end 372 of the sleeve 301 of the Bowden cable 300 with respect to the second end 372 of the actuator wire 302 of the Bowden cable 300 by twice the distance 380. This is attained by displacing, both, the sleeve 301, as well as the actuator wire 302, respectively, by the distance 380 when switching between the open state 61 and the close state 62.

By such techniques of displacing, both, the second end 372 of the actuator wire 301, as well as the second end 372 of the sleeve 301, said symmetric displacement can be implemented. The symmetric displacement enables the brace fit 290 between both plates 211, 212. In detail, both plates 211, 212 are rotated and canted with respect to the rod 13.

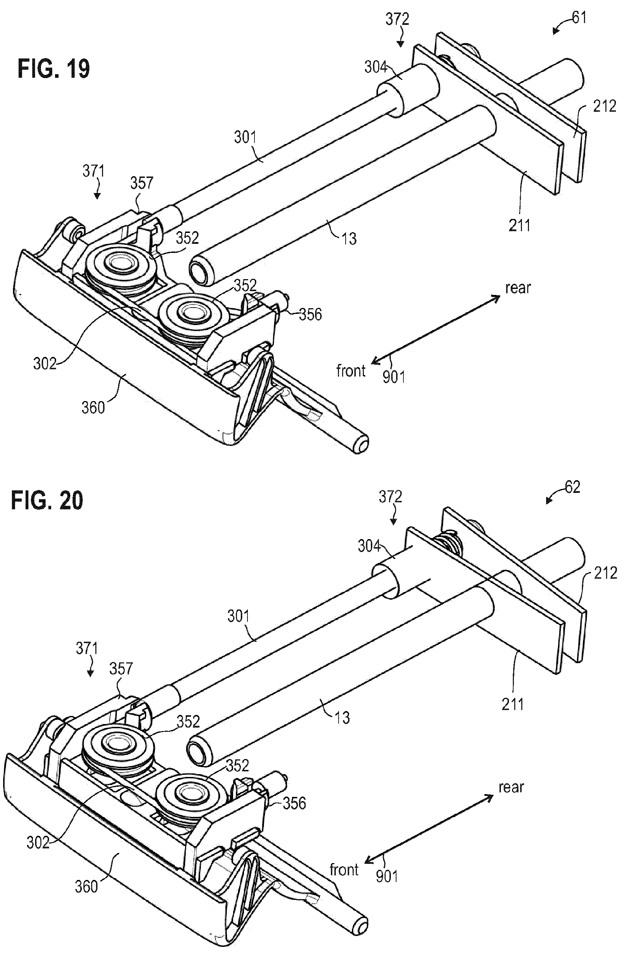

FIGs. 19 and 20 correspond to FIGs. 17 and 18, respectively.

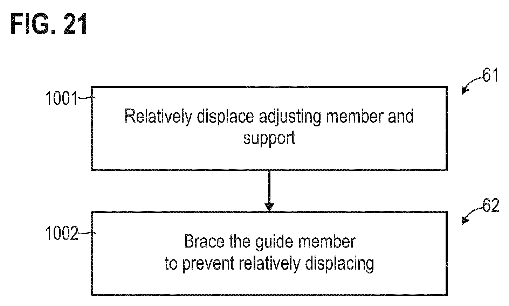

FIG. 21 is a flowchart of a method according to various embodiments. 1001 corresponds to the open state 61. The adjusting member 12 for coupling to at least a portion of the seat cushion 4, 5 is relatively displaced with respect to the support 11 of the seat 1. Said relatively displacing results in a change of the length of the seat cushion 4, 5. Said relatively displacing may be implemented as a translational motion having a single degree of freedom. E.g., said relatively displacing can be implemented along the linear path.

1002 corresponds to the close state 62. In the close state 62, the clamp 20 arranged between the support 11 and the adjusting member 12 prevents said relatively displacing. For this, the clamp 20 engages the guide member 13. A brace fit implements said engaging of the guide member by the clamp 20. Because the brace fit does not rely on the presence of engagement features such as hooks, notches, protrusions, etc. provided with the clamp 20 and/or the guide member 13, it is possible to prevent the relative displacement 55 in arbitrary relative positions of the adjusting member 12 with respect to the support 11. Thereby, gradual fine-tuning of the relative position of the adjusting member 12 with respect to the support 11 while still providing a reliable and from locking mechanism may be achieved.

One particular brace fit that may be implemented as part of 1002 corresponds to canted engagement of one or more plates 211, 212, each plate having a through hole through 215 which the guide member extends. To attain the canted engagement, the plates 211, 212 can be rotated with respect to the longitudinal axis of the guide member 13. Thereby, in the surfaces of the through holes brace an outer surface of the guide member.

Summarizing, techniques have been described above which enable length adjustment of a cushion length. E.g., manual adjustment is possible. A locking function is provided by a clamp in a single device. Relative displacement may be implemented along a guide member such as a rod or bar.

The locking function is attained, in some examples, by the clamping of one or more clamping plates on a rod/pipe; the one or more clamping plates are then frictionally engaged with the rod and a brace fit results.

The clamping plates may be actuated by a Bowden cable or a lever. When actuated to operate in an open state, the one or more clamping plates are substantially perpendicular to the rod. I.e., the projected diameter of the through holes of the clamping plates in a plane perpendicular to the rod is comparably large. By rotating of the clamping plates, the projected diameter of the through holes of the clamping plates is reduced and the clamping plates are braced on the rod. This corresponds to the close state. In the close state, the clamping plates are not perpendicular to the rod such that the projected diameter of the through holes into the plane perpendicular to the rod is reduced.

The locking / unlocking function is attained by the operation of a handle, thereby the cushion length adjustment is moving in relation to the pulley by a distance X. When actuated, the free length of the Bowden cable (length between end piece of the sleeve of the Bowden cable and end piece of the actuator wire) will be changed to twice distance Y = 2X; the pulley for the Bowden cable will not change its position. This path Y is divided equally in an adjustment of the end piece of the Bowden sleeve and the end piece of the actuator wire of the Bowden cable.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

E.g., while various scenarios have been illustrated with two plates, each plate being rotatably arranged with respect to the guide member and having a through hole, the examples may be readily implemented with a different number of plates.

E.g., while various examples have been illustrated with a coil spring, other examples may rely on other kinds and types of springs such as a leaf spring, etc..

E.g., while various scenarios have been illustrated with the guide member being rod-shaped, in other examples the guide member may have a different form.

E.g., while various examples have been illustrated where a manual actuator is employed, in other examples it is possible to employ a pneumatic or hydraulic actuator.

## Claims

1. A seat cushion length adjusting device, comprising:
- a support (11) of a seat (1),
- a guide member (13) coupled to the support (11),
- an adjusting member (12) for coupling to at least a portion of a seat cushion (4, 5) of the seat (1),
- a clamp (20) arranged with respect to the guide member (13) and configured to allow relative displacement (55) of the adjusting member (12) with respect to the support (11) along the guide member (13) in an open state (61) and to prevent the relative displacement (55) in a close state (62) by bracing (290) the guide member (13).

2. The adjusting device of claim 1,
wherein the clamp (20) comprises:
- at least one plate (211, 212), each one of the at least one plate (211, 212) having a through hole (215) through which the guide member (13) extends.

3. The adjusting device of claim 2,
wherein each one of the at least one plate (211, 212) is arranged rotatably with respect to the guide member (13), a first rotational position of the at least one plate (211, 212) corresponding to the open state (61) of the clamp (20) and a second rotational position of the at least one plate (211, 212) corresponding to the close state (62) of the clamp (20).

4. The adjusting device of claim 3,
wherein the clamp (20) comprises a spring (235) coupled with the at least one plate (211, 212) and configured to urge the at least one plate (211, 212) into the second rotational position to thereby brace (290) an inner surface of the through hole (215) of the at least one plate (211, 212) against the guide member (13).

5. The adjusting device of claim 4,
wherein the spring (235) is configured to exert a force on the at least one plate (211, 212) which is smaller than a deformational threshold force of a material of the at least one plate (211, 212).

6. The adjusting device of any one of claims 3 - 5,
wherein each one of the at least one plate (211, 212) extends at a first angle with respect to a longitudinal axis of the guide member (13) in the first rotational position and at a second angle with respect to the longitudinal axis of the guide member (13) in the second rotational position,
wherein the first angle lies within the range of 88° - 92°, preferably within the range of 89° - 91,
wherein the second angle lies outside the range.

7. The adjusting device of any one of claims 3 - 6,
wherein the respective axis of rotation (219) of each one of the at least one plate (211, 212) is arranged offset with respect to the respective through hole (215).

8. The adjusting device of any one of claims 2 - 7,
wherein each one of the at least one plate (211, 212) is made of metal and has a thickness (211A, 212A) of not less than 1 mm, preferably of not less than 1.5 mm, more preferably of not less than 2.0 mm.

9. The adjusting device of any one of claims 2 - 8,
wherein the guide member (13) is implemented by a rod ,
wherein an edge-to-edge distance of the through hole (215) of the at least one plate (211, 212) lies within the range of 100.2 % - 102.0 % of a diameter of an outer surface of the rod, preferably within the range of 100.5 % - 101.5 %, more preferably within the range of 100.7 % - 101.0 %.

10. The adjusting device of any one of the preceding claims,
wherein the guide member (13) is implemented by a rod having a smooth surface which is unstructured along its length.

11. The adjusting device of any one of the preceding claims,
wherein the clamp (20) and the guide member (13) are configured to prevent the relative displacement (55) in arbitrary positions of the adjusting member (12) with respect to the support (11).

12. The adjusting device of any one of the preceding claims, further comprising:
- a manually-operable actuator configured to selectively operate the clamp (20) in the open state (61) or the close state (62).

13. The adjusting device of claim 12,
wherein the actuator comprises a handle (360) and a Bowden cable (300) having a first end (371) coupled to the handle (360) and a second end (372) coupled to the clamp (20).

14. The adjusting device of claim 13,
wherein the actuator is configured to relatively offset the second end (372) of a sleeve (301) of the Bowden cable (300) with respect to the second end (372) of an actuator wire (302) of the Bowden cable (300) by twice a given distance (380) by displacing both the sleeve (301) and the actuator wire (302), respectively, by the given distance (380) when switching between the open state (61) and the close state (62).

15. The adjusting device of claim 14,
wherein the first end (371) of the sleeve (301) and the first end (371) of the actuator wire (302) are coupled to the handle (360),
wherein a pulley or bail of the actuator diverting the Bowden cable (300) is stationary with respect to the handle (360).

16. A method of adjusting the length of a seat cushion (4, 5) of a seat (1), comprising:
- in an open state (61) of a clamp (20): relatively displacing (55) an adjusting member (12) coupled to at least a portion of the seat cushion (4, 5) with respect to a support (11) of the seat (1) along a guide member (13),
- in a close state (62) of the clamp (20): the clamp (20) bracing the guide member (13) to prevent said relatively displacing (55).
